(19) Europäisches Patentamt
European Patent Office
Office européen des brevets

(11) **EP 3 630 540 B1**

(12) **FASCICULE DE BREVET EUROPEEN**

(45) Date de publication et mention
de la délivrance du brevet:
**11.05.2022 Bulletin 2022/19**

(21) Numéro de dépôt: **18737655.3**

(22) Date de dépôt: **18.05.2018**

(51) Classification Internationale des Brevets (IPC):
**B60N 3/02** *(2006.01)*        **B60Q 3/85** *(2017.01)*
**B60Q 3/82** *(2017.01)*        **B60Q 3/267** *(2017.01)*

(52) Classification Coopérative des Brevets (CPC):
**B60N 3/02; B60Q 3/00; B60Q 3/267; B60Q 3/76;
B60Q 3/82; B60Q 3/85**

(86) Numéro de dépôt international:
**PCT/FR2018/051211**

(87) Numéro de publication internationale:
**WO 2018/215720 (29.11.2018 Gazette 2018/48)**

(54) **ENSEMBLE DE POIGNÉE DE MAINTIEN POUR VÉHICULE AUTOMOBILE**

HALTGRIFFEINHEIT FÜR KRAFTFAHRZEUG

HANDLE ASSEMBLY FOR AUTOMOTIVE VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.07.2017 FR 1756483**

(43) Date de publication de la demande:
**08.04.2020 Bulletin 2020/15**

(73) Titulaire: **Renault s.a.s**
**92100 Boulogne Billancourt (FR)**

(72) Inventeur: **CHAKARAVARTHI, Nirmal**
**West Tambaram**
**Chennai 600045 (IN)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
CA-A1- 2 511 073        FR-A1- 3 001 672
FR-A1- 3 005 290        US-A1- 2006 104 072

**Description**

La présente invention concerne de manière générale un ensemble de poignée de maintien, et plus particulièrement un ensemble de poignée de maintien pour véhicule automobile.

Les poignées de maintien pour véhicules automobiles sont bien connues dans le métier. Habituellement, ces systèmes sont placés au-dessus d'un siège de passager du véhicule automobile afin d'apporter plus de confort à un passager. On peut se reporter au document US 6 643 897 qui décrit une poignée de maintien de véhicule. Une telle poignée de maintien est fixée à une paroi de la carrosserie du véhicule au moyen de deux crochets situés en deux endroits distincts sur ladite paroi.

Un véhicule automobile conventionnel peut aussi comprendre une lampe de lecture destinée à fournir de la lumière à un passager afin de lui permettre de réaliser plusieurs actions, comme la lecture, pendant que le véhicule se déplace la nuit. Ces lampes de lecture sont généralement placées au-dessus d'un siège de passager, en même temps qu'un ensemble d'interrupteur permettant au passager d'allumer ou d'éteindre la lampe de lecture. En outre, une lampe de lecture est généralement placée dans la paroi d'une carrosserie de véhicule de manière à émettre de la lumière dans une direction précise, habituellement à l'endroit où un passager assis dans le siège passager tient un objet, comme un livre, un ordinateur, etc.

Le document CA2511073A1 décrit un ensemble de poignée de maintien comprenant une source de lumière conforme au préambule de la revendication 1 et comportant un interrupteur.

Compte tenu de ce qui précède, la mise en place d'une poignée de maintien et d'une lampe de lecture au-dessus d'un siège d'un véhicule automobile implique la fixation d'un nombre important de pièces sur la paroi d'une carrosserie de véhicule, notamment plusieurs crochets pour fixer la poignée de maintien, un boîtier pour la lampe de lecture et un boîtier pour l'interrupteur de la lampe de lecture. Ces pièces doivent être mises en place dans un petit espace. On considère donc habituellement comme assez difficile la mise en place d'une poignée de maintien et d'une lampe de lecture au-dessus d'un siège de passager d'un véhicule automobile.

De plus, la fixation d'un nombre important de pièces est une opération qui demande du temps et de la main-d'œuvre qualifiée. Le nombre de pièces à fixer est encore plus important s'il faut monter une poignée de maintien et une lampe de lecture au-dessus de chaque siège de passager du véhicule. Par conséquent, la configuration actuelle des poignées de maintien et des lampes de lecture pour véhicules automobiles augmente le coût global du véhicule.

En outre, en raison du peu d'espace disponible pour placer l'ensemble de poignée de maintien et la lampe de lecture, l'ensemble d'interrupteur est assez difficile à atteindre pour le passager, ce qui se traduit par une difficulté pour le passager à allumer ou éteindre la lampe de lecture ou à utiliser la poignée de maintien.

L'objet de l'invention est de proposer une solution aux inconvénients susmentionnés.

Plus précisément, un objet de l'invention est de proposer un ensemble comprenant une poignée de maintien et une lampe de lecture, qui est apte à donner à un passager un confort maximal, tout en rendant plus aisée la fixation à une paroi d'une carrosserie de véhicule, en économisant l'espace et en rendant la commande plus facile pour un passager assis dans un siège de passager.

Selon un premier aspect de l'invention, un ensemble de poignée de maintien pour véhicule automobile comprend une partie de poignée principale et au moins un moyen de fixation, ladite partie de poignée principale étant destinée à être fixée à l'aide dudit moyen de fixation à une paroi du véhicule, ledit ensemble de poignée de maintien comportant une source de lumière prévue pour éclairer au moins partiellement l'environnement de l'ensemble de poignée de maintien.

L'ensemble de poignée de maintien comprend en outre une partie cylindrique apte à tourner autour de son propre axe par rapport à la partie de poignée principale, la rotation de la partie cylindrique autour de son propre axe permettant de commander l'émission de lumière produite par la source de lumière.

Avec un tel ensemble, la poignée de maintien et la lampe de lecture sont fournies en une seule partie. De plus, comme la source de lumière est commandée par la rotation de la partie cylindrique, il n'y a plus besoin d'ajouter un ensemble d'interrupteur pour commander la source de lumière. Ceci donne un ensemble plus facile à installer, plus facile à commander et qui permet d'économiser de l'espace.

Selon un mode de réalisation, la source de lumière est montée sur la partie cylindrique.

Grâce à cet agencement, la partie cylindrique peut être conçue pour allumer la lumière quand la source de lumière est orientée vers un siège de passager du véhicule, et pour éteindre la lumière quand la source de lumière est orientée vers la paroi du véhicule. En outre, un tel agencement permet d'ajuster l'orientation de la lumière afin que le passager puisse optimiser l'éclairage quand il réalise des actions différentes, comme lire et se maquiller, qui nécessitent un éclairage à des endroits différents.

Dans un autre mode de réalisation, ladite source de lumière comprend au moins une diode électroluminescente, ladite diode électroluminescente étant de préférence une lampe à diode électroluminescente du type 194 ou plus petite. Une diode du type 194 est un type de diode bien connu de l'homme du métier, sous la dénomination correspondante anglosaxonne « 194 led bulb ».

L'utilisation d'une si petite source de lumière permet d'économiser plus d'espace, afin de réduire la taille globale de l'ensemble, d'augmenter la résistance mécanique de la poignée de maintien ou de placer plus de diodes électroluminescentes dans un seul ensemble.

Avantageusement, l'ensemble de poignée de maintien comprend en outre un chemin conducteur, ladite source de lumière étant connectée électriquement audit chemin conducteur, ledit ensemble de poignée de maintien comprenant en outre un ensemble d'interrupteur apte à empêcher la circulation d'un courant électrique dans ledit chemin conducteur, ledit ensemble d'interrupteur étant commandé par la rotation de la partie cylindrique par rapport à la partie de poignée principale.

Grâce à cet ensemble d'interrupteur, la source de lumière peut être allumée et éteinte aisément par le passager malgré la présence d'une poignée de maintien. En particulier, le passager peut allumer et éteindre la source de lumière tout en tenant la poignée de maintien, d'une seule main.

De préférence, ledit ensemble d'interrupteur comprend une première surface conductrice et une deuxième surface conductrice, ledit chemin conducteur comportant un premier fil conducteur qui est en contact direct avec ladite première surface conductrice, et un deuxième fil conducteur qui est en contact direct avec ladite deuxième surface conductrice, la partie cylindrique comportant un circuit conducteur qui est agencé de façon à être en contact direct avec ladite première surface conductrice et ladite deuxième surface conductrice quand un angle de rotation de ladite partie cylindrique par rapport à ladite partie de poignée principale atteint une première valeur, et de façon à ne pas être en contact avec au moins l'une desdites première surface conductrice et deuxième surface conductrice quand ledit angle de rotation atteint une deuxième valeur, différente de la première valeur.

Dans un mode de réalisation particulier, ladite partie de poignée principale est divisée en une première sous-partie et une deuxième sous-partie, ladite première sous-partie étant placée à une première extrémité longitudinale de ladite partie cylindrique, ladite deuxième sous-partie étant placée à une deuxième extrémité longitudinale de ladite partie cylindrique, ladite première surface conductrice et ledit premier fil conducteur étant placés dans ladite première sous-partie, ladite deuxième surface conductrice et ledit deuxième fil conducteur étant placés dans ladite deuxième sous-partie.

Dans un autre mode de réalisation, ladite partie de poignée principale comporte une coque supérieure et une coque inférieure, ladite coque supérieure et ladite coque inférieure étant séparées par un plan de séparation, ladite source de lumière étant connectée électriquement à un chemin conducteur inclus dans ledit plan de séparation.

Avec un tel agencement, il est proposé un ensemble de poignée de maintien plus facile à fabriquer, ce qui se traduit par une réduction du coût global du véhicule.

Avantageusement, le plan de séparation contient aussi l'axe longitudinal de la partie cylindrique.

Il peut aussi être prévu un moyen de blocage apte à empêcher la rotation de la partie cylindrique par rapport à la partie de poignée principale.

Un tel moyen de blocage rend l'ensemble de poignée de maintien encore plus facile à utiliser, puisqu'il évite qu'un passager saisissant la poignée allume ou éteigne la source de lumière accidentellement ou involontairement.

Dans un mode de réalisation particulier, ledit moyen de blocage comprend une tige saillante s'étendant depuis une extrémité longitudinale de ladite partie cylindrique, le long de l'axe longitudinal de la partie cylindrique, et une région correspondante prévue sur la partie de poignée principale, ladite tige saillante s'étendant vers ladite région correspondante, le moyen de blocage comprenant en outre un ressort apte à déplacer la partie cylindrique en translation autour de son axe longitudinal afin de rapprocher la tige saillante de la région correspondante, ladite tige saillante étant apte à coopérer de façon positive avec ladite région correspondante.

Selon un autre mode de réalisation, ledit moyen de blocage comprend un anneau mobile placé dans ladite région correspondante, et qui est fixé à rotation sur la partie de poignée principale, ledit moyen de blocage comprenant un deuxième ressort apte à déplacer ledit anneau mobile en translation autour de l'axe longitudinal de la partie cylindrique, la tige saillante étant apte à coopérer de façon positive avec une surface intérieure dudit anneau mobile, ledit anneau mobile comprenant au moins un doigt radial qui permet à un utilisateur de déplacer l'anneau mobile en translation par rapport à la partie de poignée principale.

Des objets et avantages additionnels et d'autres caractéristiques de cette invention vont être donnés dans la description qui suit.

Des exemples de formes non limitatives de mode de réalisation vont à présent être décrits, en référence aux dessins annexés, dans lesquels :

- la figure 1 est une vue en perspective d'un ensemble de poignée de maintien selon un mode de réalisation de l'invention,
- la figure 2 est une autre vue en perspective de l'ensemble de poignée de maintien de la figure 1,
- la figure 3 est une vue en perspective éclatée des pièces de l'ensemble de poignée de maintien des figures 1 et 2, et
- la figure 4 est une vue axiale d'une partie de l'ensemble de poignée de maintien des figures 1 à 3.

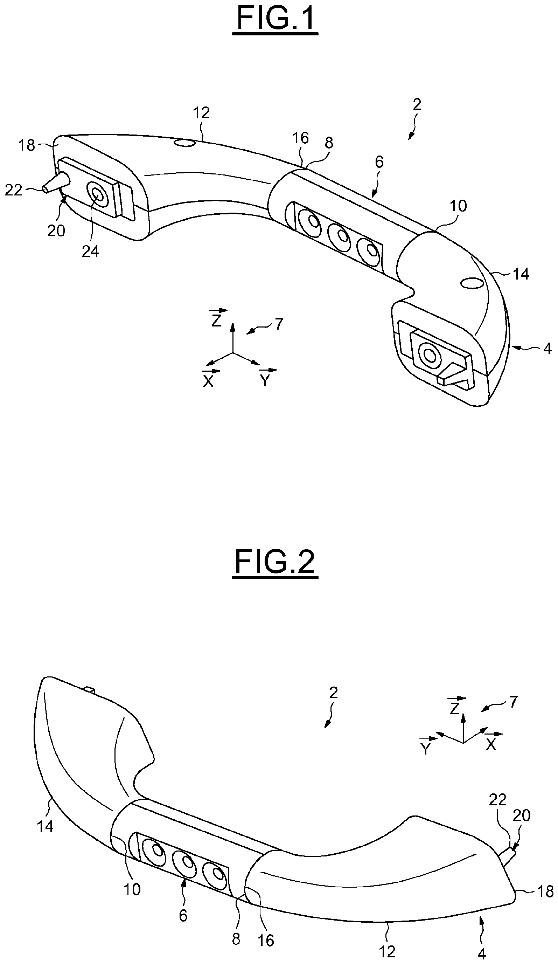

En référence aux figures 1, 2 et 3, un ensemble de poignée de maintien 2 est représenté. L'ensemble de poignée de maintien 2 est destiné à être fixé à une paroi (non représentée) d'une carrosserie de véhicule automobile. Plus précisément, l'ensemble de poignée de maintien 2 est destiné à être fixé au-dessus d'un siège de passager du véhicule automobile, comme un siège de passager avant ou un siège de passager arrière. Le but de l'ensemble de poignée de maintien 2 est d'apporter plus de confort aux passagers.

L'ensemble de poignée de maintien 2 est constitué principalement d'une partie de poignée principale 4 et d'une partie cylindrique 6. La partie de poignée principale 4 est destinée à relier l'ensemble de poignée de maintien 2 à la paroi de la carrosserie.

Une base orthonormée 7 est définie par rapport à la partie de poignée principale 4. La base orthonormée 7 comprend un vecteur $\vec{X}$, un vecteur $\vec{Y}$ et un vecteur $\vec{Z}$ perpendiculaire aux vecteurs $\vec{X}$ et $\vec{Y}$.

La partie cylindrique 6 a la forme d'un cylindre circulaire s'étendant le long d'un axe longitudinal Δ (non représenté) parallèle au vecteur $\vec{Y}$. La partie cylindrique 6 a un diamètre $d_6$. La partie cylindrique 6 comporte une première extrémité longitudinale axiale 8 et une deuxième extrémité longitudinale axiale, opposée, 10.

La partie de poignée principale 4 est constituée d'une première sous-partie 12 et d'une deuxième sous-partie 14. Comme on peut le voir sur les figures 1 et 2, les première et deuxième sous-parties 12 et 14 sont disposées de façon à entourer la partie cylindrique 6. A cette fin, la première sous-partie 12 et la deuxième sous-partie sont placées respectivement près de la première extrémité 8 et de la deuxième extrémité 10. Les sous-parties 12 et 14 sont de forme substantiellement symétrique par rapport à un plan de symétrie (non représenté) perpendiculaire au vecteur $\vec{Y}$. Le fait d'avoir des sous-parties substantiellement symétriques 12 et 14 est particulièrement avantageux puisque cela rend plus facile la conception et la fabrication de la partie de poignée principale 4, et réduit ensuite le coût global de l'ensemble de poignée de maintien 2.

En référence à la figure 1, la sous-partie 12 comprend une extrémité proximale 16 et une extrémité distale 18. L'extrémité proximale 16 est relativement proche de la partie cylindrique 6, tandis que l'extrémité distale 18 est relativement éloignée de la partie cylindrique 6. De manière plus spécifique, l'extrémité proximale 16 se trouve en face de la première extrémité 8 de la partie cylindrique 6. L'extrémité proximale 16 a la forme d'un disque perpendiculaire au vecteur $\vec{Y}$, ayant un diamètre $d_{16}$ sensiblement égal au diamètre $d_6$. L'extrémité distale 18 est de forme substantiellement rectangulaire, perpendiculaire au vecteur $\vec{X}$, et comportant des angles arrondis. La description ci-dessus de la sous-partie 12 s'applique aussi à la sous-partie 14, dont l'extrémité proximale 16 se trouve en face de la deuxième extrémité 10 de la partie cylindrique 6.

L'extrémité distale 18 de chaque sous-partie 12, 14 comprend un moyen de fixation 20. Le moyen de fixation 20 est prévu pour fixer la sous-partie correspondante 12, 14 à la paroi de la carrosserie. Dans le mode de réalisation représenté, le moyen de fixation 20 comprend un connecteur mâle 22, qui peut aussi être nommé un bouchon, et un trou traversant 24. Le connecteur mâle 22 est destiné à coopérer avec un connecteur femelle correspondant (non représenté) placé dans la paroi de la carrosserie. Le trou traversant 24 est prévu pour recevoir une vis (non représentée) coopérant avec un écrou correspondant (non représenté) de la paroi de la carrosserie. Le moyen de fixation 20 peut toutefois être de toute sorte sans s'éloigner de la portée de l'invention, comme un boulon ou une paire de connecteurs s'engageant par pression.

De manière plus spécifique, comme on peut le mieux le voir sur la figure 1, le connecteur mâle de la sous-partie 12 a une forme légèrement différente de celle du connecteur mâle de la sous-partie 14 : la section transversale dans le plan perpendiculaire au vecteur $\vec{X}$ du connecteur mâle de la sous-partie 12 est circulaire alors que la même section transversale du connecteur mâle de la sous-partie 14 est rectangulaire. Ceci est une autre caractéristique avantageuse du mode de réalisation décrit qui empêche l'opérateur de monter l'ensemble de poignée de maintien 2 avec le mauvais côté vers le haut.

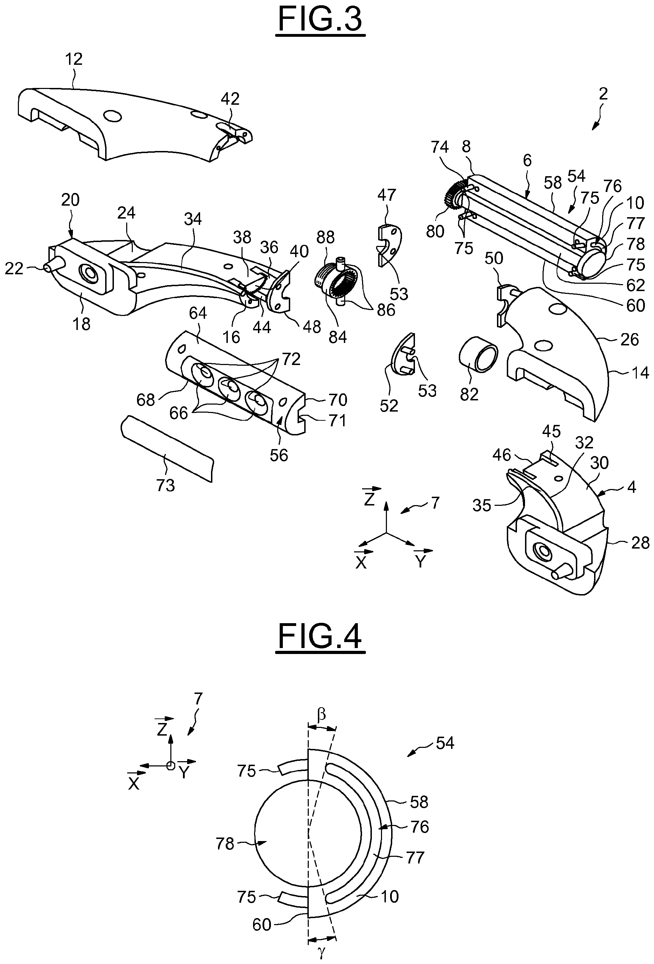

Comme on peut le voir sur la figure 3, la sous-partie 14 comprend une coque supérieure 26 et une coque inférieure 28. La description qui suit des coques supérieure et inférieure 26 et 28 de la sous-partie 14 s'applique aussi aux coques qui constituent la sous-partie 12. La coque supérieure 26 comporte une surface inférieure plate (non visible sur la figure 3). La coque inférieure 28 comporte une surface supérieure plate 30. Quand les coques 26 et 28 sont assemblées pour former la sous-partie 14, la surface inférieure de la coque supérieure 26 est en contact avec la surface supérieure 30 et les deux surfaces forment un plan de séparation (non représenté) de la sous-partie 14. Le plan de séparation est perpendiculaire au un vecteur $\vec{Z}$. La coque supérieure 26 et la coque inférieure 28 peuvent être reliées par n'importe quelle sorte de moyen de jonction (non représenté), comme un connecteur à assemblage par pression, un ensemble vis-écrou ou un ensemble à vis et trou taraudé.

La coque inférieure 28 comporte une rainure courbée 32 dans sa surface supérieure 30. La rainure courbée 32 s'étend de l'extrémité distale 18 à l'extrémité proximale 16. La rainure 32 de la coque inférieure 28 de la sous-partie 12 contient un premier fil électroconducteur 34. En outre, la rainure 32 de la coque inférieure 28 de la sous-partie 14 contient un deuxième fil électroconducteur 35. Les fils conducteurs électriques 34 et 35 sont destinés respectivement à être connectés électriquement aux bornes d'un dispositif de distribution d'énergie électrique (non représenté), comme une batterie d'accumulation électrique du véhicule automobile. Dans le mode de réalisation représenté, le fil 34 est connecté électriquement à une borne négative de la batterie du véhicule automobile et le fil 35 est connecté électriquement à une borne positive de la batterie du véhicule.

L'utilisation d'une coque supérieure et d'une coque inférieure pour fabriquer les sous-parties 12 et 14 est avantageuse puisque cela facilite la fabrication de ces sous-parties par moulage par injection. En outre, le fait que les coques soient reliées par un plan de séparation qui contient les fils 34 et 35 facilite l'introduction d'un chemin conducteur dans les sous-parties 12 et 14.

La sous-partie 12 comporte un trou borgne 36 qui s'étend vers l'intérieur depuis l'extrémité proximale 16. De façon plus spécifique, le trou borgne 36 a la forme d'un cylindre circulaire s'étendant le long de l'axe $\Delta$ et ayant un diamètre $d_{36}$. A l'intérieur du trou borgne 36, un ergot 38 s'étend d'une surface de fond du trou 36 vers l'extrémité proximale 16. L'ergot 38 a la forme d'un cylindre circulaire s'étendant le long de l'axe $\Delta$ et ayant un diamètre $d_{38}$. L'ergot 38 a une tête 40. La tête 40 s'étend radialement vers l'extérieur par rapport à l'ergot 38. La tête 40 est délimitée radialement par une surface extérieure radiale (non référencée) avec des cannelures extérieures axiales (non référencées). La tête 40 a une forme cylindrique circulaire et a un diamètre $d_{40}$ qui est compris entre les diamètres $d_{38}$ et $d_{36}$. Dans le mode de réalisation représenté, le diamètre $d_{40}$ est substantiellement égal à la moitié du diamètre $d_6$.

La coque supérieure 26 de la sous-partie 12 comporte une première fente de coulissement 42. De même, la coque inférieure 28 de la sous-partie 12 comporte une deuxième fente de coulissement 44. Les fentes de coulissement 42 et 44 s'étendent vers l'intérieur depuis l'extrémité proximale 16, parallèlement à l'axe $\Delta$. La longueur longitudinale des fentes de coulissement 42 et 44 ne dépasse pas la longueur longitudinale du trou borgne 36. Les fentes de coulissement 42 et 44 s'étendent radialement, d'une surface extérieure de la sous-partie 12 au trou borgne 36.

La sous-partie 14 comporte un trou borgne 45 qui s'étend vers l'intérieur depuis l'extrémité proximale 16 et qui a la forme d'un cylindre circulaire s'étendant le long de l'axe $\Delta$ et ayant un diamètre $d_{45}$. Le diamètre $d_{45}$ est substantiellement égal au diamètre $d_{36}$. A l'intérieur du trou borgne 45, un ergot 46 s'étend d'une surface de fond du trou 45 vers l'extrémité proximale 16. L'ergot 46 a la forme d'un cylindre circulaire s'étendant le long de l'axe $\Delta$ et ayant un diamètre $d_{46}$ qui est substantiellement égal au diamètre $d_{40}$.

Comme on peut le voir sur la figure 3, la partie de poignée principale 4 comporte quatre demi-disques conducteurs électriques 47, 48, 50 et 52. Les demi-disques 47, 48, 50 et 52 sont substantiellement identiques. Les demi-disques 47, 48, 50 et 52 ont un diamètre $d_h$ substantiellement égal au diamètre $d_{16}$. Les demi-disques 47, 48, 50 et 52 sont délimités radialement vers l'intérieur par une surface cylindrique circulaire 53. Le diamètre $d_{53}$ de la surface cylindrique circulaire 53 est compris entre les diamètres $d_{36}$ et $d_{40}$.

Les demi-disques 47 et 48 sont fixés à l'extrémité proximale 16 de la première sous-partie 12. Les demi-disques 50 et 52 sont fixés à l'extrémité proximale 16 de la deuxième sous-partie 14. Grâce à cet agencement, le demi-disque 48 est en contact direct avec le fil électroconducteur 34 puis est connecté électriquement à la borne négative de la batterie. Le demi-disque 52 est en contact direct avec le fil électroconducteur 35 puis est connecté électriquement à la borne positive de la batterie. Un matériau électriquement isolant (non représenté) est placé de manière à éviter la connexion électrique entre les demi-disques 47 et 48, et entre les demi-disques 50 et 52. En variante, les demi-disques 47 et 50 peuvent être faits d'un matériau électriquement isolant.

La partie cylindrique 6 comporte une première pièce 54 et une deuxième pièce 56. Les pièces 54 et 56 sont assemblées entre elles le long de l'axe $\Delta$ afin de former la partie cylindrique 6.

La première pièce 54 a la forme d'un cylindre semi-circulaire le long de l'axe $\Delta$. La première pièce 54 a une surface extérieure cylindrique 58 et une surface plate 60. La surface plate 60 est pourvue d'une nervure rectiligne 62.

La deuxième pièce 56 a la forme d'un cylindre semi-circulaire le long de l'axe $\Delta$, et a une surface extérieure cylindrique 64 et une surface plate 70. La surface plate 70 comporte une rainure rectiligne 71 dont la forme est complémentaire de celle de la nervure rectiligne 62. La rainure rectiligne 71 et la nervure rectiligne 62 coopèrent de façon positive afin de former une connexion à engagement par pression. En conséquence, la première pièce 54 et la deuxième pièce 56 peuvent être assemblées de façon mécanique pour former la partie cylindrique 6.

La deuxième pièce 56 comporte trois trous coniques 66. Les trous coniques 66 sont placés sur la surface cylindrique 64, dans une partie évidée 68. Dans une position radialement intérieure, chaque trou conique 66 comporte un trou traversant (non représenté) qui reçoit une diode électroluminescente (DEL) 72. Les DEL 72 sont fournies en tant que source de lumière afin de donner à un passager une lumière comme une lumière de lecture. Dans le mode de réalisation représenté, il y a trois ampoules DEL du type 194. Ces DEL sont avantageuses car elles sont relativement petites et relativement lumineuses, de sorte qu'il est possible de placer un grand nombre de DEL sans augmenter la taille de la partie cylindrique 6. De plus, la réduction de la proportion de volume de la pièce 56 prise par la source de lumière permet d'augmenter la proportion de volume prise par le matériau qui constitue la pièce 56, afin d'accroître la résistance mécanique de la partie cylindrique 6. Toutefois, les DEL 72 peuvent être remplacées par n'importe quel autre type de source de lumière sans l'éloigner de la portée de l'invention, comme un tube néon ou des ampoules lumineuses classiques.

La partie cylindrique 6 comporte en outre un couvercle protecteur en verre 73 destiné à recouvrir les trous coniques 66 et les DEL 72. Le couvercle protecteur 73 est de forme substantiellement rectangulaire et est emboîté dans la partie évidée 68.

Les DEL 72 sont montées sur un circuit imprimé (non représenté). La deuxième pièce 56 comporte un boîtier (non représenté) destiné à recevoir le circuit imprimé. Ce boîtier peut être placé près d'une surface de fond de la rainure rectiligne 71. Le circuit imprimé comprend un chemin électriquement conducteur auquel sont connectées électriquement les DEL 72.

La première pièce 54 comporte un fil électroconducteur 74 placé à la première extrémité 8 de la partie cylindrique 6. Le fil électroconducteur 74 comprend deux extrémités 75 connectées électriquement à une borne négative (non représentée) du circuit imprimé. Le fil électroconducteur 74 comporte une partie centrale 77 (non visible sur la figure 3) faisant saillie axialement vers l'extérieur depuis l'extrémité 8 de la partie cylindrique 6 de manière à pouvoir être en contact direct avec au moins l'un des demi-disques 47 et 48. En termes pratiques, le fil 74 passe par deux orifices qui s'étendent de l'extrémité 8 à la surface plate 60, la partie centrale 77 s'étendant entre lesdits deux orifices.

De même, un fil électroconducteur 76 est placé à la deuxième extrémité 10 de la partie cylindrique 6. Le fil électroconducteur 76 est identique au fil électroconducteur 74. Le fil 76 a notamment deux extrémités 75 connectées électriquement à une borne positive (non représentée) du circuit imprimé, et une partie centrale 77 faisant saillie axialement vers l'extérieur depuis l'extrémité 10 de la partie cylindrique 6 de manière à pouvoir être en contact direct avec au moins l'un des demi-disques 50 et 52.

Les fils 74 et 76 forment avec le circuit imprimé un circuit conducteur sur lequel sont montées les DEL 72. La portée de l'invention n'est pas limitée à ce circuit conducteur particulier. Il est en effet possible, sans s'éloigner de la portée de l'invention, de remplacer les fils 74 et 76 et le circuit imprimé par un autre circuit conducteur, comme un circuit à fils sur lequel sont montées les DEL 72, en reliant les extrémités longitudinales 8 et 10.

En référence à la figure 4, la partie centrale 77 du fil 76 est représentée, faisant saillie axialement vers l'extérieur depuis l'extrémité 10 de la partie cylindrique. La plage angulaire sur laquelle s'étend la partie centrale 77 est définie par les angles β et y. Ces angles correspondent aux angles formés entre le plan de la surface plate 60 et les extrémités respectives de la plage angulaire sur laquelle s'étend la partie centrale 77. Comme représenté sur la figure 4, dans ce mode de réalisation, les angles β et y sont définis comme suit :

$$\beta = \gamma = 15°$$

La première pièce 54 comporte en outre une première tige saillante 78. La tige 78 s'étend axialement vers l'extérieur depuis la deuxième extrémité axiale 10 de la partie cylindrique 6. La tige 78 a la forme d'un cylindre circulaire dont le diamètre $d_{78}$ est substantiellement égal au diamètre $d_{46}$. Le diamètre $d_{78}$ est plus petit que le diamètre $d_{53}$. Le fil électroconducteur 76 est disposé de manière à encercler partiellement la tige 78.

La première pièce 54 comporte une deuxième tige saillante 80 qui s'étend radialement vers l'extérieur depuis la première extrémité axiale 8 de la partie cylindrique 6. La tige 80 a la forme d'un cylindre circulaire ayant substantiellement le même diamètre $d_{80}$ que le diamètre $d_{78}$. La longueur axiale de la tige 80 est supérieure à la longueur axiale de la tige 78. La tige 80 comprend des cannelures axiales extérieures (non référencées) sensiblement identiques à celles de la tête 40.

Quand la partie cylindrique 6 est montée sur la partie de poignée principale 4, la tige 78 est insérée dans le trou 45 et la tige 80 est insérée dans le trou 36. Pour ce faire, on fait glisser la tige 78 entre les demi-disques 50 et 52 et l'on fait glisser la tige 80 entre les demi-disques 47 et 48. Grâce à cet agencement, la partie cylindrique 6 est maintenue entre les sous-parties 12 et 14 de la partie de poignée principale 4, comme représenté sur les figures 1 et 2. Dans ces conditions, la partie cylindrique 6 est apte à tourner autour de son propre axe Δ par rapport à la partie de poignée principale 4. La partie cylindrique 6 est en outre apte à se déplacer en translation le long de son propre axe Δ par rapport à la partie de poignée principale 4, entre une première position extrême dans laquelle l'extrémité axiale de la tige 80 touche la tête 40 de l'ergot 38, et une deuxième position extrême dans laquelle l'extrémité axiale de la tige 78 touche l'ergot 46.

L'ensemble de poignée de maintien 2 comprend en outre un premier ressort 82. Le diamètre $d_{S2}$ du ressort 82 est plus grand que le diamètre $d_{46}$ et plus petit que le diamètre $d_{53}$. Le ressort 82 est inséré dans le trou 45 de façon à prendre appui contre une surface de fond du trou 45. L'extrémité opposée du ressort 82 prend appui sur l'extrémité axiale 10 de la partie cylindrique 6. Quand la partie cylindrique 6 est montée sur la partie de poignée principale 4 comme représenté sur les figures 1 et 2, le ressort 82 travaille en compression de telle manière que la partie cylindrique 6 est poussée par le ressort 82 vers la première sous-partie 12.

L'ensemble de poignée de maintien 2 comprend un anneau mobile 84. L'anneau 84 est délimité radialement vers l'extérieur par une surface extérieure ayant un diamètre $d_{84o}$ plus petit que le diamètre $d_{36}$. L'anneau 84 comporte deux doigts radiaux 86 qui s'étendent vers l'extérieur, radialement depuis sa surface extérieure. Les doigts radiaux 86 sont disposés l'un en face de l'autre. L'anneau 84 est délimité radialement vers l'intérieur par une surface intérieure ayant un diamètre $d_{84i}$ légèrement plus important que le diamètre $d_{40}$ et ayant des cannelures axiales intérieures correspondant aux cannelures axiales extérieures de la tête 40 et aux cannelures axiales extérieures de la tige 80. Quand la partie cylindrique 6 est montée sur la partie de poignée principale 4 comme représenté sur les figures 1 et 2, l'anneau 84 est inséré dans le trou borgne 36, les doigts radiaux 86 étant insérés dans les fentes de coulissement 42 et 44. Grâce à cet agencement, l'anneau 84 est fixé à rotation sur la première sous-partie 12 et est apte à se déplacer en translation le long de l'axe Δ par rapport à la première sous-partie 12.

Un deuxième ressort 88 est placé à l'intérieur du trou 36. Le diamètre $d_{88}$ du ressort 88 est plus grand que le diamètre $d_{38}$. Le ressort 88 prend appui sur une surface de fond du trou 36. L'extrémité opposée du ressort 88 prend appui sur une surface axiale frontale de l'anneau 84. Quand la partie cylindrique 6 est montée sur la partie de poignée principale 4 comme représenté sur les figures 1 et 2, le ressort 88 travaille en compression, de sorte que l'anneau 84 est poussé par le ressort 88 vers la partie cylindrique 6.

Pendant le fonctionnement normal de l'ensemble de poignée de maintien 2, la partie cylindrique 6 est poussée vers la première sous-partie 12, de sorte que la tige 80 prend appui sur l'ergot 40. Par ailleurs, l'anneau 84 est poussé vers la partie cylindrique 6 de telle manière qu'il encercle la tige 80. Les cannelures extérieures de la tige 80 coopèrent avec les cannelures intérieures de l'anneau 84. Il en résulte que la partie cylindrique 6 est fixé à rotation sur la partie de poignée principale 4.

Si la partie cylindrique 6 est déplacée en translation vers la sous-partie 14, par exemple suite à une action réalisée par un passager, ce qui comprime le ressort 82, la tige 80 se rapproche des demi-disques 47 et 48. A cet instant, les cannelures extérieures de la tige 80 coopèrent encore avec les cannelures intérieures de l'anneau 84. Si entretemps l'anneau 84 est déplacé vers la sous-partie 12, ce qui comprime le ressort 88, l'anneau 84 est éloigné des demi-disques 47 et 48. Dans cette configuration, les cannelures extérieures de la tige 80 se dégagent des cannelures intérieures de l'anneau 84. Dans ces conditions, la partie cylindrique 6 est libre de tourner autour de son propre axe Δ par rapport à la partie de poignée principale 4.

Si les actions susmentionnées sont interrompues, le ressort 82 repousse la partie cylindrique 6 vers la sous-partie 12 tandis que le ressort comprimé 88 repousse l'anneau 84 vers la partie cylindrique 6. Dans ces conditions, les cannelures extérieures de la tige 80 se mettent de nouveau en prise avec les cannelures intérieures de l'anneau 84, de sorte que la partie cylindrique est de nouveau fixée à rotation à la partie de poignée principale 4.

On notera que dans ce mode de réalisation particulier, un premier ressort, un anneau mobile et un deuxième ressort sont prévus afin d'assurer une sécurité optimale. En effet, un passager peut saisir la partie cylindrique 6 au cours de la prise d'un virage brusque par le véhicule automobile, ce qui peut se traduire par un mouvement de translation involontaire de la partie cylindrique 6, qui provoque le désengagement des cannelures extérieures de la tige 80 d'avec les cannelures intérieures de l'anneau 84. Le ressort 82, d'une part, et l'anneau 84 avec le ressort 88, d'autre part, fournissent un double moyen de blocage afin d'éviter au mieux toute rotation involontaire de la partie cylindrique 6.

Néanmoins, on peut imaginer un moyen de blocage différent sans s'éloigner de la portée de l'invention.

Un moyen de blocage possible peut par exemple mettre en œuvre le premier ressort 82, l'anneau 84 étant fixe. Avec un tel moyen de blocage, le deuxième ressort 88 peut être omis et/ou l'anneau 84 peut être remplacé par des cannelures axiales intérieures sur la surface intérieure du trou borgne 36. Un autre moyen de blocage possible peut n'impliquer que l'anneau 84 et le deuxième ressort 88, la partie cylindrique 6 étant immobilisée en translation par rapport à la partie de poignée principale 4. Avec un tel moyen de blocage, le premier ressort 82 peut être omis.

Comme on peut le déduire de la figure 3, le courant électrique qui circule dans les DEL 72 dépend de l'angle de rotation α de la partie cylindrique 6 par rapport à la partie de poignée principale 4. De façon plus spécifique, l'angle de rotation est l'angle orienté entre le vecteur $\vec{X}$ et un vecteur $\vec{n}$ (voir figures 1 et 2). Le vecteur $\vec{n}$ est orienté le long de l'axe de l'un des trous coniques 66, vers l'extérieur de la partie cylindrique 6.

En référence à la figure 1, dans laquelle la partie cylindrique 6 a subi une rotation de telle manière que les DEL 72 sont orientées de façon à éclairer dans la direction du moyen de blocage 20, l'angle de rotation α est égal à zéro. Dans ces conditions, la partie centrale 77 des fils 74 et 76 touche les demi-disques 47 et 50 uniquement. Etant donné que les demi-disques 47 et 50 ne sont pas électriquement connectés à la batterie, les diodes 72 ne sont pas alimentées en courant électrique. Dans ces conditions, les diodes 72 sont éteintes.

En référence à la figure 2, dans laquelle la partie cylindrique 6 a subi une rotation de telle manière que les DEL 72 sont orientées dans la direction opposée au moyen de fixation 20, l'angle de rotation α est égal à 180°. Dans ces conditions, la partie centrale 77 des fils 74 et 76 est en contact direct avec les demi-disques 48 et 52. Puisque les demi-disques 48 et 52 sont électriquement connectés à la batterie par l'intermédiaire des fils 34 et 35, les DEL 72 reçoivent un courant électrique. Dans ces conditions, elles sont allumées et éclairent l'environnement de l'ensemble de poignée de maintien.

Pour assurer l'alimentation électrique des DEL 72, il suffit qu'une partie de la partie centrale des fils 74 et 76 touche directement les demi-disques 47 et 50, respectivement. Dans le mode de réalisation représenté, les DEL 72 reçoivent une alimentation électrique tant que l'angle de rotation α reste entre 15° et 345°. La portée de l'invention n'est toutefois par limitée à cette plage de valeurs donnée à titre d'exemple. Pour modifier cette plage, il est possible de réduire ou d'augmenter les angles β et/ou γ. Par exemple, en choisissant un angle β = 25° et un angle γ = 35°, les diodes reçoivent du courant électrique tant que l'angle de rotation α reste entre 35° et 325°.

Au vu de ce qui précède, l'ensemble 2 fournit à la fois une poignée de maintien et une source de lumière afin de donner au passager d'un véhicule automobile un confort maximal, tout en économisant l'espace, ce qui le rend plus facile à concevoir et à assembler avec la carrosserie.

L'allumage et l'extinction des DEL 72 peuvent être réalisés facilement en tournant la partie cylindrique 6. En outre, la lumière peut être orientée afin d'offrir un confort optimal au passager.

Avec le moyen de blocage représenté, on évite au mieux la commutation involontaire des DEL. De plus, la désactivation du moyen de blocage peut être effectuée facilement, même avec une seule main. Pour cela, l'utilisateur peut déplacer de la paume de la main la partie cylindrique 6 en translation vers la sous-partie 14, tout en déplaçant du pouce l'anneau 84 en translation vers la sous-partie 12.

## Revendications

1. Ensemble de poignée de maintien (2) pour véhicule automobile, comprenant une partie de poignée principale (4) et au moins un moyen de fixation (20), ladite partie de poignée principale (4) étant destinée à être fixée à l'aide dudit moyen de fixation (20) à une paroi du véhicule, ledit ensemble de poignée de maintien (2) comportant une source de lumière prévue pour éclairer au moins partiellement l'environnement de l'ensemble de poignée de maintien (2), comprenant en outre une partie cylindrique (6) apte à tourner autour de son propre axe ($\Delta$) par rapport à la partie de poignée principale (4), la rotation de la partie cylindrique (6) autour de son propre axe ($\Delta$) permettant de commander l'émission de lumière produite par la source de lumière **caractérisé en ce que** la source de lumière est montée sur la partie cylindrique (6).

2. Ensemble de poignée de maintien (2) selon la revendication 1, dans lequel ladite source de lumière comprend au moins une diode électroluminescente (72), ladite diode électroluminescente (72) étant de préférence une lampe à diode électroluminescente du type 194 ou plus petite.

3. Ensemble de poignée de maintien (2) selon l'une quelconque des revendications 1 ou 2, comprenant en outre un chemin conducteur, ladite source de lumière étant connectée électriquement audit chemin conducteur, ledit ensemble de poignée de maintien (2) comprenant en outre un ensemble d'interrupteur apte à empêcher la circulation d'un courant électrique dans ledit chemin conducteur, ledit ensemble d'interrupteur étant commandé par la rotation de la partie cylindrique (6) par rapport à la partie de poignée principale (4).

4. Ensemble de poignée de maintien (2) selon la revendication 3, dans lequel ledit ensemble d'interrupteur comprend une première surface conductrice (47) et une deuxième surface conductrice (50), ledit chemin conducteur comportant un premier fil conducteur (34) qui est en contact direct avec ladite première surface conductrice (47), et un deuxième fil conducteur (35) qui est en contact direct avec ladite deuxième surface conductrice (50), la partie cylindrique (6) comportant un circuit conducteur qui est agencé de façon à être en contact direct avec ladite première surface conductrice (47) et ladite deuxième surface conductrice (50) quand un angle de rotation ($\alpha$) de ladite partie cylindrique (6) par rapport à ladite partie de poignée principale (4) atteint une première valeur, et de façon à ne pas être en contact avec au moins l'une desdites première surface conductrice (47) et deuxième surface conductrice (50) quand ledit angle de rotation ($\alpha$) atteint une deuxième valeur, différente de la première valeur.

5. Ensemble de poignée de maintien (2) selon la revendication 4, dans lequel ladite partie de poignée principale (4) est divisée en une première sous-partie (12) et une deuxième sous-partie (14), ladite première sous-partie (12) étant placée à une première extrémité longitudinale (8) de ladite partie cylindrique (6), ladite deuxième sous-partie (14) étant placée à une deuxième extrémité longitudinale (10) de ladite partie cylindrique (6), ladite première surface conductrice (47) et ledit premier fil conducteur (34) étant placés dans ladite première sous-partie (12), ladite deuxième surface conductrice (50) et ledit deuxième fil conducteur (35) étant placés dans ladite deuxième sous-partie (14).

6. Ensemble de poignée de maintien (2) selon l'une quelconque des revendications 1 à 5, dans lequel ladite partie de poignée principale (4) comporte une coque supérieure (26) et une coque inférieure (28), ladite coque supérieure (26) et ladite coque inférieure (28) étant séparées par un plan de séparation (30), ladite source de lumière étant connectée électriquement à un chemin conducteur inclus dans ledit plan de séparation (30).

7. Ensemble de poignée de maintien (2) selon l'une quelconque des revendications 1 à 6, comprenant en outre un moyen de blocage apte à empêcher la rotation de la partie cylindrique (6) par rapport à la partie de poignée principale (4).

8. Ensemble de poignée de maintien (2) selon la revendication 7, dans lequel ledit moyen de blocage comprend une tige saillante (80) s'étendant depuis une extrémité longitudinale (8) de ladite partie cylindrique (6), le long de l'axe longitudinal ($\Delta$) de la partie cylindrique (6), et une région correspondante prévue sur la partie de poignée principale (4), ladite tige saillante (80) s'étendant vers ladite région correspondante, le moyen de blocage comprenant en outre un ressort (82) apte à déplacer la partie cylindrique (6) en translation autour de son axe longitudinal (Δ) afin de rapprocher la tige saillante (80) de la région correspondante, ladite tige saillante (80) étant apte à coopérer de façon positive avec ladite région correspondante.

9. Ensemble de poignée de maintien (2) selon la revendication 8, dans lequel ledit moyen de blocage comprend un anneau mobile (84) placé dans ladite région correspondante, et qui est fixé à rotation sur la partie de poignée principale (4), ledit moyen de blocage comprenant un deuxième ressort (88) apte à déplacer ledit anneau mobile (84) en translation autour de l'axe longitudinal (Δ) de la partie cylindrique (6), la tige saillante (80) étant apte à coopérer de façon positive avec une surface intérieure dudit anneau mobile (84), ledit anneau mobile (84) comprenant au moins un doigt radial (86) qui permet à un utilisateur de déplacer l'anneau mobile (84) en translation par rapport à la partie de poignée principale (4).

**Patentansprüche**

1. Haltegriffeinheit (2) für ein Kraftfahrzeug, umfassend einen Hauptgriffteil (4) und mindestens ein Befestigungsmittel (20), wobei der Hauptgriffteil (4) dazu bestimmt ist, mit Hilfe des Befestigungsmittels (20) an einer Wand des Fahrzeugs befestigt zu sein, wobei die Haltegriffeinheit (2) eine Lichtquelle aufweist, die dazu vorgesehen ist, die Umgebung der Haltegriffeinheit (2) zumindest teilweise zu beleuchten, ferner umfassend einen zylindrischen Teil (6), der dazu geeignet ist, sich um seine eigene Achse (Δ) in Bezug auf den Hauptgriffteil (4) zu drehen, wobei die Drehung des zylindrischen Teils (6) um seine eigene Achse (Δ) es ermöglicht, die Abgabe des von der Lichtquelle erzeugten Lichts zu steuern, **dadurch gekennzeichnet, dass** die Lichtquelle am zylindrischen Teil (6) montiert ist.

2. Haltegriffeinheit (2) nach Anspruch 1, wobei die Lichtquelle mindestens eine Leuchtdiode (72) umfasst, wobei die Leuchtdiode (72) vorzugsweise eine Leuchtdiodenlampe des Typs 194 oder kleiner ist.

3. Haltegriffeinheit (2) nach einem der Ansprüche 1 oder 2, ferner umfassend einen leitenden Pfad, wobei die Lichtquelle elektrisch mit dem leitenden Pfad verbunden ist, wobei die Haltegriffeinheit (2) ferner eine Schaltereinheit umfasst, die dazu geeignet ist, den Fluss eines elektrischen Stroms im leitenden Pfad zu verhindern, wobei die Schaltereinheit durch die Drehung des zylindrischen Teils (6) in Bezug auf den Hauptgriffteil (4) gesteuert wird.

4. Haltegriffeinheit (2) nach Anspruch 3, wobei die Schaltereinheit eine erste leitende Fläche (47) und eine zweite leitende Fläche (50) umfasst, wobei der leitende Pfad einen ersten leitenden Draht (34), der in direktem Kontakt mit der ersten leitenden Fläche (47) steht, und einen zweiten leitenden Draht (35), der in direktem Kontakt mit der zweiten leitenden Fläche (50) steht, aufweist, wobei der zylindrische Teil (6) eine leitende Schaltung aufweist, die so angeordnet ist, dass sie in direktem Kontakt mit der ersten leitenden Fläche (47) und der zweiten leitenden Fläche (50) steht, wenn ein Drehwinkel (α) des zylindrischen Teils (6) in Bezug auf den Hauptgriffteil (4) einen ersten Wert erreicht, und dass sie mit zumindest einer der ersten leitenden Fläche (47) und der zweiten leitenden Fläche (50) nicht in Kontakt steht, wenn der Drehwinkel (α) einen vom ersten Wert verschiedenen zweiten Wert erreicht.

5. Haltegriffeinheit (2) nach Anspruch 4, wobei der Hauptgriffteil (4) in einen ersten Unterabschnitt (12) und einen zweiten Unterabschnitt (14) unterteilt ist, wobei der erste Unterabschnitt (12) an einem ersten Längsende (8) des zylindrischen Teils (6) angeordnet ist, wobei der zweite Unterabschnitt (14) an einem zweiten Längsende (10) des zylindrischen Teils (6) angeordnet ist, wobei die erste leitende Fläche (47) und der erste leitende Draht (34) im ersten Unterabschnitt (12) angeordnet sind, wobei die zweite leitende Fläche (50) und der zweite leitende Draht (35) im zweiten Unterabschnitt (14) angeordnet sind.

6. Haltegriffeinheit (2) nach einem der Ansprüche 1 bis 5, wobei der Hauptgriffteil (4) eine obere Schale (26) und eine untere Schale (28) aufweist, wobei die obere Schale (26) und die untere Schale (28) durch eine Trennebene (30) voneinander getrennt sind, wobei die Lichtquelle elektrisch mit einem in der Trennebene (30) enthaltenen leitenden Pfad verbunden ist.

7. Haltegriffeinheit (2) nach einem der Ansprüche 1 bis 6, ferner umfassend ein Blockiermittel, das dazu geeignet ist, die Drehung des zylindrischen Teils (6) in Bezug auf den Hauptgriffteil (4) zu verhindern.

8. Haltegriffeinheit (2) nach Anspruch 7, wobei das Blockiermittel einen vorstehenden Schaft (80) umfasst, der sich von einem Längsende (8) des zylindrischen Teils (6) entlang der Längsachse (Δ) des zylindrischen Teils (6) erstreckt, und einen entsprechenden Bereich, der am Hauptgriffteil (4) vorgesehen ist, wobei sich der vorstehende Schaft (80) in Richtung des entsprechenden Bereichs erstreckt, wobei das Blockiermittel ferner eine Feder (82) umfasst, die dazu geeignet ist, den zylindrischen Teil (6) translatorisch um seine Längsachse (Δ) zu bewegen, um den vorstehenden Schaft (80) dem entsprechenden Bereich anzunähern, wobei der vorstehende Schaft (80) dazu geeignet ist, formschlüssig mit dem entsprechenden Bereich zusammenzuwirken.

**9.** Haltegriffeinheit (2) nach Anspruch 8, wobei das Blockiermittel einen beweglichen Ring (84) umfasst, der im entsprechenden Bereich angeordnet und der drehbar am Hauptgriffteil (4) befestigt ist, wobei das Blockiermittel eine zweite Feder (88) umfasst, die dazu geeignet ist, den beweglichen Ring (84) translatorisch um die Längsachse (Δ) des zylindrischen Teils (6) zu bewegen, wobei der vorstehende Schaft (80) dazu geeignet ist, formschlüssig mit einer Innenfläche des beweglichen Rings (84) zusammenzuwirken, wobei der bewegliche Ring (84) mindestens einen radialen Finger (86) umfasst, der es einem Benutzer ermöglicht, den beweglichen Ring (84) translatorisch in Bezug auf den Hauptgriffteil (4) zu bewegen.

**Claims**

**1.** Assist handle assembly (2) for a motor vehicle, comprising a main handle part (4) and at least one fastening means (20), said main handle part (4) being intended to be fastened to a wall of the vehicle with the aid of said fastening means (20), said assist handle assembly (2) having a light source provided to at least partially illuminate the surroundings of the assist handle assembly (2), further comprising a cylindrical part (6) that is able to rotate about its own axis (Δ) with respect to the main handle part (4), the rotation of the cylindrical part (6) about its own axis (Δ) controlling the emission of light produced by the light source, **characterized in that** the light source is mounted on the cylindrical part (6).

**2.** Assist handle assembly (2) according to Claim 1, wherein said light source comprises at least one light-emitting diode (72), said light-emitting diode (72) preferably being a light-emitting diode lamp of the 194 type or smaller.

**3.** Assist handle assembly (2) according to either one of Claims 1 and 2, further comprising a conductive path, said light source being electrically connected to said conductive path, said assist handle assembly (2) further comprising a set of switches that is able to prevent the flow of an electric current along said conductive path, said set of switches being controlled by the rotation of the cylindrical part (6) with respect to the main handle part (4).

**4.** Assist handle assembly (2) according to Claim 3, wherein said set of switches comprises a first conductive surface (47) and a second conductive surface (50), said conductive path having a first conductive wire (34) which is in direct contact with said first conductive surface (47), and a second conductive wire (35) which is in direct contact with said second conductive surface (50), the cylindrical part (6) having a conductive circuit which is arranged so as to be in direct contact with said first conductive surface (47) and said second conductive surface (50) when an angle of rotation (α) of said cylindrical part (6) with respect to said main handle part (4) reaches a first value, and so as to not be in contact with at least one of said first conductive surface (47) and second conductive surface (50) when said angle of rotation (α) reaches a second value, which differs from the first value.

**5.** Assist handle assembly (2) according to Claim 4, wherein said main handle part (4) is divided into a first sub-part (12) and a second sub-part (14), said first sub-part (12) being placed at a first longitudinal end (8) of said cylindrical part (6), said second sub-part (14) being placed at a second longitudinal end (10) of said cylindrical part (6), said first conductive surface (47) and said first conductive wire (34) being placed in said first sub-part (12), said second conductive surface (50) and said second conductive wire (35) being placed in said second sub-part (14).

**6.** Assist handle assembly (2) according to any one of Claims 1 to 5, wherein said main handle part (4) has an upper shell (26) and a lower shell (28), said upper shell (26) and said lower shell (28) being separated by a separation plane (30), said light source being electrically connected to a conductive path included in said separation plane (30).

**7.** Assist handle assembly (2) according to any one of Claims 1 to 6, further comprising a blocking means that is able to prevent the rotation of the cylindrical part (6) with respect to the main handle part (4).

**8.** Assist handle assembly (2) according to Claim 7, wherein said blocking means comprises a projecting rod (80) extending from one longitudinal end (8) of said cylindrical part (6) along the longitudinal axis (Δ) of the cylindrical part (6), and a corresponding region provided on the main handle part (4), said projecting rod (80) extending towards said corresponding region, the blocking means further comprising a spring (82) that is able to move the cylindrical part (6) in translation about its longitudinal axis (Δ) in order to bring the projecting rod (80) closer to the corresponding region, said projecting rod (80) being able to cooperate with said corresponding region in a positive manner.

**9.** Assist handle assembly (2) according to Claim 8, wherein said blocking means comprises a movable ring (84) which is placed in said corresponding region and which is fixed in terms of rotation on the main handle part (4), said blocking means comprising a second spring (88) that is able to move said movable ring (84) in translation about the longitudinal axis (Δ) of the cylindrical part (6), the projecting rod (80) being able to cooperate with an inner surface of said movable ring (84) in a positive manner, said movable ring (84) comprising at least one radial finger (86) which allows a user to move the movable ring (84) in translation with respect to the main handle part (4).

# FIG.1

# FIG.2

## FIG.3

## FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6643897 B

- CA 2511073 A1